# FASCICULE DE BREVET EUROPEEN

(11) **EP 1 530 041 B1**
(45) Date de publication et mention de la délivrance du brevet: **12.08.2015**
(21) Numéro de dépôt: 04292648.5
(22) Date de dépôt: 09.11.2004
(51) Int. Cl.: G01N 27/06, G01N 27/07, D06F 39/00

(54) **Sonde de mesure de conductivité et cuve de lavage équipée de celle-ci**
Leitfähigkeitssensor und Spülbehälter mit einem Leitfähigkeitssensor
Conductivity probe and wash tub containing such a probe

(30) Priorité: 10.11.2003 FR 0313191
(43) Date de publication de la demande: 11.05.2005
(73) Titulaire: Groupe Brandt, 92500 Rueil-Malmaison (FR)
(72) Inventeur: Garofalo, François, 69680 Chassieu (FR); Balestriero, Christophe, 69300 Caluire et cuire (FR)
(74) Mandataire: Santarelli

(56) Documents cités:
- EP-A- 0 133 227
- EP-A- 0 506 137
- GB-A- 2 153 079
- US-A- 4 007 319

## Description

La présente invention concerne de manière générale la mesure de la conductivité électrique dans un liquide. Plus particulièrement, l'invention concerne une sonde de mesure de conductivité adaptée à la mesure de la conductivité d'un bain de lavage et une cuve de lavage équipée d'une telle sonde.

Dans l'état de la technique, il est connu des sondes adaptées à une mesure dans un liquide en circulation. Dans ce type de sonde, une solution classique consiste à faire circuler le liquide entre deux électrodes de mesure qui sont disposées à l'intérieur d'un corps creux de la sonde. Des orifices sont aménagés dans le corps creux afin d'autoriser une entrée et une sortie du liquide. Une telle structure n'est pas adaptée à une mesure dans un bain.

En effet, dans un bain, la présence d'une cavité de mesure dans la sonde a tendance à retenir la partie du liquide sur laquelle est effectuée la mesure, au détriment de la fidélité de la mesure du bain. De plus, un dépôt est susceptible de se former dans la cavité.

Le document EP-0133227 divulgue un capteur de mesure de conductivité qui ne comprend pas de cavité de mesure. Ce capteur a donc une structure plus adaptée à une mesure dans un bain.

Le capteur selon EP-0133227 comprend des électrodes de mesure qui sont disposées sur des surfaces extérieures d'un corps cylindrique du capteur. Les électrodes sont constituées par des anneaux et sont disposées dans des plans radiaux parallèles du corps cylindrique. Ce capteur présente un certain nombre d'inconvénients.

Lorsque le capteur est monté verticalement, c'est-à-dire, avec son axe longitudinal perpendiculaire au plan de surface du bain, la fiabilité de la mesure est mal maîtrisée quand le niveau du bain est bas. En effet, dans une telle situation, il est possible d'avoir des électrodes qui sont plongées dans le bain de manière non uniforme. Par exemple, une électrode haute peut se trouver partiellement hors du bain alors qu'une électrode basse est totalement immergée. Cet inconvénient est particulièrement handicapant dans un bain avec un niveau variable pouvant devenir relativement faible. Une telle situation se produit par exemple dans certaines phases d'un programme de lavage d'une machine à laver ou d'une machine lavante-séchante.

Ce capteur présente également l'inconvénient de comprendre de nombreuses pièces (corps cylindrique, électrodes, tiges conductrices de connexion électrique, couvercle, joints toriques) qui doivent être usinées et assemblées. Un tel capteur a un coût de revient qui le rend incompatible avec une fabrication d'appareils de grande consommation.

Il est également connu, du document GB-2153079, un dispositif à base d'électrodes pour mesurer la conductivité. La structure allongée du dispositif comprend une paire d'électrodes de forme allongée et un matériau non conducteur électriquement, isolant les deux électrodes au sein de la structure. Les électrodes sont disposées sur une même surface extérieure à l'extrémité basse du dispositif.

Ce capteur présente l'inconvénient, d'une part, d'avoir une faible surface de mesure en contact avec le bain et, d'autre part, d'avoir une faible distance entre les électrodes ce qui peut impliquer une mesure non fiable de la conductivité si le bain est non homogène.

La présente invention a pour objet de fournir un dispositif de mesure de conductivité particulièrement adapté à la mesure de la conductivité électrique d'un bain de niveau variable et à une intégration dans des appareils de grande consommation.

Le dispositif selon l'invention pour mesurer la conductivité électrique d'un liquide comprend un corps longitudinal constitué d'un matériau électriquement isolant et au moins une paire d'électrodes de mesure de forme analogue et situées sur des surfaces extérieures du corps, les électrodes étant situées dans des plans distincts respectifs et le matériau électriquement isolant remplissant un espace intercalaire entre deux électrodes en regard l'une de l'autre, et est caractérisé en ce que les électrodes sont disposées respectivement dans des plans parallèles situés symétriquement par rapport à un axe longitudinal du corps, les électrodes s'étendant parallèlement audit axe longitudinal.

Compte tenu des caractéristiques ci-dessus, le dispositif selon l'invention présente l'avantage d'autoriser une mesure de conductivité fiable dans différentes positions de montage, y compris la position verticale.

En outre, ces caractéristiques autorisent une bonne répartition des lignes de courant électrique entre les électrodes dans le liquide environnant, et corrélativement une mesure de meilleure fidélité car effectuée de manière plus uniforme sur un échantillon de liquide de volume supérieur.

Selon une forme de réalisation préférée, le corps comprend un support, une bride de montage et un connecteur qui sont formés en une seule pièce, et une enveloppe extérieure en matériau électriquement isolant qui est surmoulée autour du support. De plus, le support, la bride de montage, le connecteur et l'enveloppe extérieure sont réalisés dans un matériau électriquement isolant.

Avantageusement, le support comprend une pluralité d'alvéoles dans lesquelles pénètre le matériau de l'enveloppe extérieure surmoulée.

Selon une autre caractéristique, le dispositif selon l'invention comprend également deux lames électriquement conductrices qui sont partiellement noyées par surmoulage dans le corps, les lames comportant chacune des première et seconde parties constituant respectivement au moins une électrode de mesure et au moins une broche de connexion électrique, et une pluralité d'orifices d'ancrage pour solidariser les lames et un matériau de surmoulage.

Les alvéoles du support et les orifices d'ancrage des lames garantissent une bonne solidarité entre les éléments. Il est ainsi possible de garantir une bonne tenue des lames dans le surmoulage malgré les dilatations dues aux variations de température.

De préférence, le support, la bride de montage, le connecteur et l'enveloppe extérieure sont réalisés par moulage par injection.

Selon encore d'autres caractéristiques, le support comprend deux surfaces opposées munies de bossages qui supportent respectivement les deux lames, et le connecteur est adapté à recevoir les broches de connexion électrique. De plus, l'enveloppe extérieure est surmoulée autour du support, entre les lames et le support, et sur les lames, de telle manière à laisser apparaître les électrodes de mesure.

Conformément à un autre aspect du dispositif selon l'invention, le support comprend un ou plusieurs éléments de positionnement et un ou plusieurs clips de maintien pour mettre en position et maintenir les lames sur les bossages des deux surfaces opposées, et les lames comprennent des parties de détrompage pour déterminer des faces des lames destinées à venir contre les deux surfaces opposées, respectivement.

De préférence, les lames ont une forme plane et les électrodes ont une forme plane rectangulaire. Avantageusement, les deux lames sont réalisées en acier inoxydable ou en un matériau traité contre l'oxydation.

Les différentes caractéristiques mentionnées plus haut du dispositif selon l'invention rendent celui-ci apte à une fabrication automatisée en grande série. Un faible coût de revient compatible avec le marché de la grande consommation est donc possible.

Selon encore une autre caractéristique avantageuse, le corps du dispositif selon l'invention ne comporte que des surfaces extérieures planes ou convexes et des états de surfaces extérieurs adaptés à interdire une accumulation et/ou une rétention de dépôts en provenance du liquide dans lequel est plongé le corps.

Un objet de la présente invention est également de fournir une cuve de lavage équipée d'au moins un dispositif de mesure de conductivité électrique selon l'invention.

Selon une caractéristique de la cuve de lavage selon l'invention, le dispositif de mesure de conductivité électrique est monté dans la cuve de telle manière que les électrodes sont disposées dans des plans verticaux et l'axe longitudinal du dispositif est horizontal.

De préférence, le dispositif de mesure de conductivité est monté de manière étanche sur une bride de montage d'un élément équipant la cuve. L'élément en question peut être un élément chauffant.

Le montage du dispositif de mesure de conductivité sur une bride de montage d'un élément préexistant dans la cuve présente par exemple, entre autres, l'avantage de pouvoir équiper des modèles disponibles de cuve de lavage sans aucune modification de ceux-ci.

La cuve de lavage selon l'invention trouve une application privilégiée dans une machine à laver, une machine lavante-séchante ou un lave-vaisselle.

D'autres caractéristiques et avantages de l'invention apparaîtront à la lecture de la description suivante de plusieurs formes de réalisation préférées du dispositif de mesure de conductivité et de la cuve de lavage selon l'invention, en liaison aux dessins annexés, dans lesquels :
la Fig.1 est une vue en perspective d'une sonde de mesure de conductivité selon l'invention;
les Figs.2A et 2B sont des vues en coupe transversale, respectivement au niveau de plans de coupe AA et BB, d'un corps de mesure compris dans la sonde de la Fig.1 ;
la Fig.3 montre une lame en matériau conducteur, formant électrode et broche de connexion électrique, comprise dans la sonde de la Fig.1 ;
la Fig.4 est une vue en perspective d'un support, d'un connecteur et d'une bride de montage formés en une seule pièce et compris dans la sonde de la Fig.1 ;
la Fig.5 montre de manière schématique un emplacement préféré de la sonde de mesure de conductivité comprise dans la cuve de lavage selon l'invention ; et
la Fig.6 montre en perspective un montage préféré de la sonde de mesure de conductivité sur une bride d'un élément chauffant équipant la cuve de lavage selon l'invention.

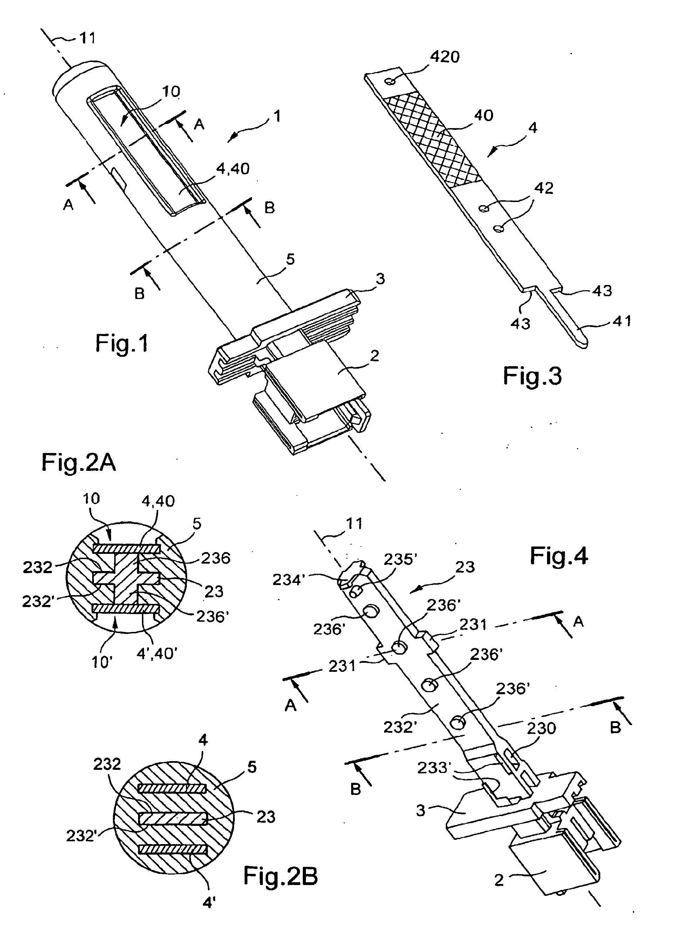

En référence aux Figs.1, 2A et 2B, une forme de réalisation préférée de la sonde de mesure de conductivité selon l'invention comprend essentiellement un corps de mesure 1, un connecteur 2 et une bride de montage 3.

Le corps de mesure 1 est prévu pour être plongé dans un bain dont la conductivité électrique doit être mesurée.

Comme cela apparaît particulièrement à la Fig.1, le corps de mesure 1 est réalisé avec des formes planes ou arrondies convexes, de manière à rendre plus difficile des dépôts éventuels lorsque le corps 1 est plongé dans le bain.

Dans le cas d'une intégration de la sonde selon l'invention dans une machine à laver, une machine lavante-séchante ou un lave-vaisselle, les rayons de courbure des formes arrondies du corps de mesure 1 sont de préférence prévus de manière à éviter l'accrochage de défilures et de bourres de linge présentes dans le bain de lavage.

De préférence, le corps de mesure 1 a une forme allongée de manière à se projeter dans le bain. Un axe longitudinal du corps de mesure 1 correspond dans ce cas à un axe longitudinal 11 de la sonde.

Le corps de mesure 1 comprend une enveloppe extérieure 5 dans laquelle sont aménagées au moins deux fenêtres 10 et 10'.

L'enveloppe extérieure 5 est réalisée par surmoulage par injection d'un matériau électriquement isolant. Un plastique adapté au moulage par injection peut par exemple être employé.

Les fenêtres 10 et 10' sont formées dans l'enveloppe 5 de part et d'autre d'un axe longitudinal 11 de la sonde.

Les fenêtres 10 et 10' laissent apparaître des électrodes de mesure 40 et 40' faisant partie intégrante de deux lames 4 et 4', respectivement. Les électrodes de mesure 40 et 40' sont prévues pour venir en contact avec le bain.

Les lames 4 et 4' ont globalement la même forme et sont disposées en parallèle dans le corps de mesure 1, de part et d'autre de l'axe longitudinal 11 et de manière symétrique à celui-ci.

Dans la sonde selon l'invention, les électrodes de mesure 40 et 40' sont donc situées en regard l'une de l'autre dans des plans parallèles respectifs et un espace intercalaire entre elles est rempli par un matériau électriquement isolant. Les plans des électrodes 40 et 40' sont situés symétriquement par rapport à l'axe longitudinal 11.

La lame 4 est montrée de manière détaillée à la Fig.3.

Les lames 4 et 4' sont par exemple réalisées en acier inoxydable. Un outil de découpe peut être employé pour la fabrication des lames 4 et 4'.

Outre l'électrode de mesure 40, la lame 4 comprend également une broche de connexion 41, réalisée au niveau d'une extrémité de la lame 4, et différents orifices 42 et 420. De manière analogue, la lame 4' comprend, outre l'électrode de mesure 40', une broche de connexion (non représentée). réalisée au niveau d'une extrémité de la lame 4' et différents orifices (non représentés).

Lorsque la lame 4, 4', est en place dans la sonde, la broche de connexion 41, est localisée dans une partie intérieure du connecteur 2.

Les orifices 42 sont des orifices d'ancrage et ont pour fonction de solidariser la lame 4 et le matériau de surmoulage de l'enveloppe extérieure 5. Il est ainsi possible de garantir une bonne tenue de la lame 4 dans le surmoulage malgré les dilatations dues aux variations de température.

Comme montré à la Fig.3, les orifices d'ancrage 42 sont par exemple au nombre de deux et sont situés sur des parties de la lame 4 destinées à être recouvertes par le matériau de surmoulage. L'orifice 420 est situé à proximité d'une extrémité de la lame 4 et est destiné à être associé à un pion de centrage du support 23, afin de positionner la lame 4. Les orifices 42 sont prévus pour être remplis par le matériau de surmoulage.

La conformation des lames 4, 4', avec les broches de connexion 41, qui font partie intégrante du corps des lames, permet de s'affranchir de toute connectique entre les électrodes de mesure 40, 40', et les broches 41, intégrées dans le connecteur 2.

En référence maintenant aux Figs.2A, 2B et 4, la sonde selon l'invention comprend un support 23 qui constitue une partie centrale intérieure du corps de mesure 1.

A la Fig.2A, le support 23, les lames 4, 4' et le surmoulage 5 sont montrés en coupe au niveau des fenêtres 10 et 10' et de bossages 236, 236' du support 23, suivant un plan AA perpendiculaire à l'axe longitudinal 11.

A la Fig.2B, le support 23, les lames 4, 4' et le surmoulage 5 sont montrés en coupe au niveau des fenêtres 10 et 10' et d'une partie sans bossage du support 23, suivant un plan BB perpendiculaire à l'axe longitudinal 11.

Comme montré à la Fig.4, le support 23 forme une pièce unique avec la bride 3 et le connecteur 2.

Le support 23 est de préférence fabriqué par moulage par injection à partir d'un matériau électriquement isolant, tel qu'un plastique.

Le support 23 se prolonge suivant l'axe longitudinal 11 à l'intérieur de la quasi-totalité du corps de mesure 1.

Le support 23 est formé avec une pluralité d'alvéoles 230 dans lesquelles pénètre le matériau de l'enveloppe extérieure 5 lorsque celle-ci est surmoulée. Une telle structure alvéolaire du support 23 garantit une bonne solidarité entre le support 23 et l'enveloppe extérieure 5, de façon à favoriser l'étanchéité entre ces deux éléments.

Comme cela apparaît également à la Fig.4, des éléments saillants 231 peuvent aussi être prévus dans le support 23. Les éléments 231 facilitent le positionnement du support 23 dans un moule destiné au surmoulage de l'enveloppe extérieure 5. Les éléments 231 contribuent également à solidariser le support 23 et l'enveloppe extérieure 5.

Le support 23 comporte deux surfaces 232, 232', munies chacune d'un pion de centrage 235, 235', et de quatre bossages 236, 236'. Les surfaces 232, 232', sont parallèles et situées symétriquement par rapport à l'axe longitudinal 11. Le pion de centrage 235, 235', est prévu pour se loger dans l'orifice 420, 420', de la lame 4, 4', de manière à positionner celle-ci. Une fois montées sur le support 23, les lames 4, 4', reposent respectivement sur les bossages 236, 236', respectivement.

Dans le support 23, outre les pions de centrage 235, 235', des nervures 233, 233', et des clips 234, 234', sont de préférence prévus aussi de façon à positionner et maintenir les lames 4, 4', contre les bossages 236, 236', respectivement, notamment pendant l'opération de surmoulage de l'enveloppe extérieure 5.

Des parties de détrompage 43, 43', montrées à la Fig.3, sont découpées dans les lames 4, 4', afin de permettre une mise en place correcte des lames 4 et 4' sur le support 23.

Les lames 4 et 4' étant fabriquées avec un outil de découpe, elles comprennent des bavures sur le pourtour d'une de leurs faces. Les faces des lames 4, 4', comprenant les bavures sont celles qui sont appliquées contre les bossages 236, 236', du support 23.

Comme montré à la Fig.2B, du fait des bossages 236, 236', les lames 4, 4' sont enveloppées par le matériau de surmoulage une fois que celui-ci a été appliqué. Cette caractéristique favorise l'étanchéité entre les lames 4, 4'.

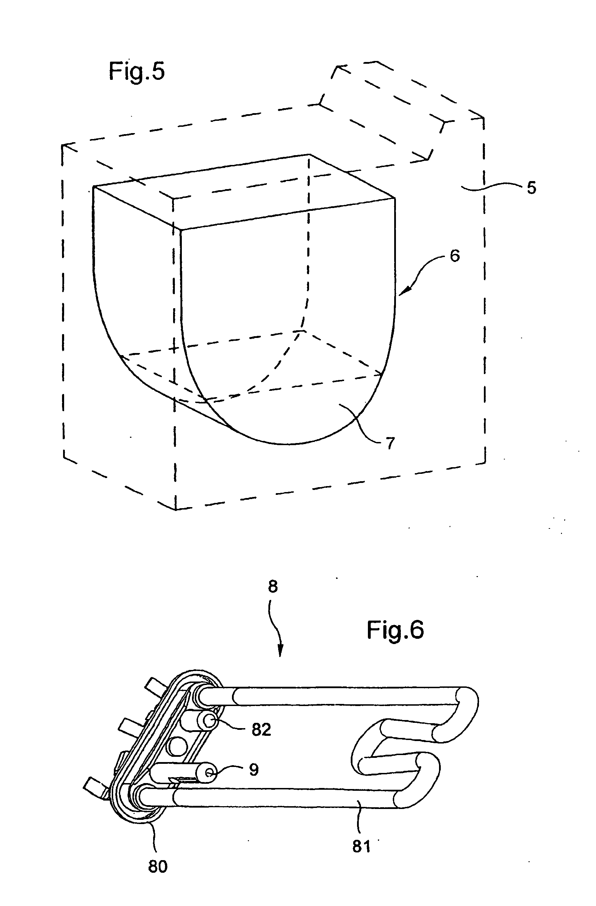

En référence aux Figs.5 et 6, il est maintenant décrit une forme de réalisation préférée d'une cuve de lavage 6 selon l'invention. Cette forme de réalisation est plus particulièrement adaptée à une intégration dans une machine à laver, une machine lavante-séchante ou un lave-vaisselle.

De manière classique, la cuve de lavage 6 est équipée d'un tambour de lavage (non représenté) situé dans une partie supérieure de la cuve 6 et d'un moteur (non représenté) situé dans une partie inférieure de celle-ci.

Conformément à l'invention, la cuve de lavage 6 est également équipée d'une sonde de mesure de conductivité 9 selon l'invention.

Dans cette forme de réalisation préférée, la sonde 9 est montée dans une partie basse 7 de la cuve de lavage 6 au niveau de laquelle est installé un élément chauffant 8.

Selon l'invention, la sonde 9 est de préférence montée sur la bride de montage d'un élément équipant la cuve de lavage 6.

Comme montré à la Fig.6, dans cette forme de réalisation préférée, la sonde 9 est montée sur une bride de montage 80 de l'élément chauffant 8.

Outre la bride de montage 80 sur laquelle est montée la sonde 9, l'élément chauffant 8 comprend une résistance chauffante 81 et un capteur de température 82. La résistance chauffante 81 et le capteur de température 82 sont montés sur la bride de montage 80.

Des joints d'étanchéité (non représentés) sont prévus dans les différents éléments 9, 80, 81 et 82, de manière à assurer une étanchéité parfaite de la cuve de lavage 6.

Conformément à l'invention, la sonde 9 est de préférence montée dans la cuve de lavage 6 de telle manière que l'axe longitudinal 11 de la sonde 9 est horizontal, et donc, parallèle à un plan de surface du bain de lavage.

De préférence, la sonde 9 est orientée de telle manière que les électrodes 40, 40', des lames 4, 4', sont perpendiculaires au plan de surface du bain de lavage.

Bien entendu, la sonde selon l'invention peut être montée dans la cuve de lavage à des emplacements autres qu'une partie basse de la cuve, selon les applications envisagées par l'homme du métier.

## Revendications

1. Dispositif pour mesurer la conductivité électrique d'un liquide comprenant un corps longitudinal (1) constitué d'un matériau électriquement isolant et au moins une paire d'électrodes de mesure (40, 40') de forme analogue et situées sur des surfaces extérieures dudit corps (1), lesdites électrodes (40, 40') étant situées dans des plans distincts respectifs et ledit matériau électriquement isolant remplissant un espace intercalaire entre deux électrodes en regard l'une de l'autre (40, 40'), **caractérisé en ce que** lesdites électrodes (40, 40') sont disposées respectivement dans des plans parallèles situés symétriquement par rapport à un axe longitudinal (11) dudit corps (1), les électrodes s'étendant parallèlement audit axe longitudinal (11).

2. Dispositif selon la revendication 1, **caractérisé en ce que** ledit corps (1) comprend un support (23), une bride de montage (3) et un connecteur (2) qui sont formés en une seule pièce, et une enveloppe extérieure (5) qui est surmoulée autour dudit support (23), et lesdits support (23), bride de montage (3), connecteur (2) et enveloppe extérieure (5) sont réalisés dans un matériau électriquement isolant.

3. Dispositif selon la revendication 1 ou 2, **caractérisé en ce qu'**il comprend également deux lames électriquement conductrices (4, 4') qui sont partiellement noyées par surmoulage dans ledit corps (1), lesdites lames (4, 4') comportant chacune des première et seconde parties constituant respectivement au moins une dite électrode de mesure (40, 40') et au moins une broche de connexion électrique (41), et une pluralité d'orifices d'ancrage (42) pour solidariser lesdites lames (4, 4') et un matériau de surmoulage.

4. Dispositif selon les revendications 2 et 3, **caractérisé en ce que** ledit support (23) comprend deux surfaces opposées (232, 232') munies de bossages (236, 236') qui supportent respectivement lesdites deux lames (4, 4'),
ledit connecteur (2) est adapté à recevoir lesdites broches de connexion électrique (41), et
ladite enveloppe extérieure (5) est surmoulée autour dudit support (23), entre lesdites lames (4, 4') et ledit support (23), et sur lesdites lames (4, 4'), de telle manière à laisser apparaître lesdites électrodes de mesure (40, 40').

5. Dispositif selon la revendication 2 ou 4, **caractérisé en ce que** ledit support (23) comprend des alvéoles (230) dans lesquelles pénètre le matériau de ladite enveloppe extérieure surmoulée (5).

6. Dispositif selon la revendication 3 ou 4, **caractérisé en ce que** lesdites lames (4, 4') ont une forme plane et lesdites électrodes (40, 40') ont une forme plane rectangulaire.

7. Dispositif selon l'une quelconque des revendications 1 à 6, **caractérisé en ce que** ledit corps (1) ne comporte que des surfaces extérieures planes ou convexes et des états de surface extérieurs adaptés à interdire une accumulation et/ou une rétention de dépôts en provenance du liquide dans lequel est plongé ledit corps (1).

8. Cuve de lavage notamment pour machine à laver ou machine lavante-séchante, **caractérisée en ce qu'**elle est équipée d'au moins un dispositif de mesure de conductivité électrique (9) selon l'une quelconque des revendications précédentes 1 à 7.

9. Cuve de lavage selon la revendication 8, **caractérisée en ce que** ledit dispositif de mesure de conductivité électrique (9) est monté dans ladite cuve (6) de telle manière que lesdites électrodes (40, 40') sont disposées dans des plans verticaux et ledit axe longitudinal (11) dudit dispositif (9) est horizontal.

10. Cuve de lavage selon la revendication 8 ou 9, caractérisée en ce ledit dispositif de mesure de conductivité électrique (9) est monté de manière étanche sur une bride de montage (80) d'un élément (8) équipant ladite cuve (6).

11. Cuve de lavage selon la revendication 10, caractérisée en ce ledit élément est un élément chauffant (8).

## Patentansprüche

1. Vorrichtung zur Messung der elektrischen Leitfähigkeit einer Flüssigkeit, mit einem aus einem elektrisch isolierenden Material bestehenden Längskörper (1) und mindestens zwei Messelektroden (40, 40') mit vergleichbarer Form, die auf Außenflächen des Körpers (1) liegen, wobei die Elektroden (40, 40') in jeweiligen getrennten Ebenen liegen und das elektrisch isolierende Material einen Zwischenraum zwischen zwei gegenüberliegenden Elektroden (40, 40') füllt, **dadurch gekennzeichnet, dass** die Elektroden (40, 40') jeweils in parallelen Ebenen angeordnet sind, die zu einer Längsachse (11) des Körpers (1) symmetrisch liegen, wobei sich die Elektroden parallel zur Längsachse (11) erstrecken.

2. Vorrichtung nach Anspruch 1, **dadurch gekennzeichnet, dass** der Körper (1) einen Halter (23), einen Montagebügel (3) und ein Verbindungsstück (2) aufweist, die einstückig ausgebildet sind, sowie eine Außenhülle (5), die um den Halter (23) herum aufgeformt ist, und der Halter (23), der Montagebügel (3), das Verbindungsstück (2) und die Außenhülle (5) aus einem elektrisch isolierenden Material bestehen.

3. Vorrichtung nach Anspruch 1 oder 2, **dadurch gekennzeichnet, dass** sie auch zwei elektrisch leitende Zungen (4, 4') aufweist, die durch Aufformen teilweise im Körper (1) eingebettet sind, wobei die Zungen (4, 4') jeweils einen ersten und einen zweiten Abschnitt, die jeweils mindestens eine Messelektrode (40, 40') und mindestens einen Stift für den elektrischen Anschluss (41) bilden, und mehrere Verankerungsöffnungen (42) aufweisen, um die Zungen (4, 4') und ein Aufformmaterial fest miteinander zu verbinden.

4. Vorrichtung nach den Ansprüchen 2 und 3, **dadurch gekennzeichnet, dass** der Halter (23) zwei gegenüberliegende Flächen (232, 232') aufweist, die mit Erhebungen (236, 236') versehen sind, die jeweils die beiden Zungen (4, 4') halten,
das Verbindungsstück (2) dazu geeignet ist, die Stifte für den elektrischen Anschluss (41) aufzunehmen, und
die Außenhülle (5) um den Halter (23), zwischen den Zungen (4, 4') und dem Halter (23) und auf den Zungen (4,4') aufgeformt ist, so dass die Messelektroden (40, 40') sichtbar sind.

5. Vorrichtung nach Anspruch 2 oder 4, **dadurch gekennzeichnet, dass** der Halter (23) Kammern (230) aufweist, in die das Material der aufgeformten Außenhülle (5) dringt.

6. Vorrichtung nach Anspruch 3 oder 4, **dadurch gekennzeichnet, dass** die Zungen (4, 4') eine ebene Form und die Elektroden (40, 40') eine rechteckige ebene Form haben.

7. Vorrichtung nach einem der Ansprüche 1 bis 6, **dadurch gekennzeichnet, dass** der Körper (1) nur ebene oder konvexe Außenflächen und Außenflächenzustände aufweist, die dazu geeignet sind, eine Anhäufung und/oder eine Ansammlung von Ablagerungen aus der Flüssigkeit, in die der Körper (1) getaucht ist, zu verhindern.

8. Spülbehälter, insbesondere für eine Waschmaschine oder einen Waschtrockner, **dadurch gekennzeichnet, dass** er mit mindestens einer Vorrichtung (9) zur Messung der elektrischen Leitfähigkeit nach einem der Ansprüche 1 bis 7 ausgestattet ist.

9. Spülbehälter nach Anspruch 8, **dadurch gekennzeichnet, dass** die Vorrichtung (9) zur Messung der elektrischen Leitfähigkeit so im Behälter (6) angebracht ist, dass die Elektroden (40, 40') in senkrechten Ebenen liegen und die Längsachse (11) der Vorrichtung (9) waagerecht verläuft.

10. Spülbehälter nach Anspruch 8 oder 9, **dadurch gekennzeichnet, dass** die Vorrichtung (9) zur Messung der elektrischen Leitfähigkeit abdichtend an einem Montagebügel (80) eines Elements (8) angebracht ist, mit dem der Behälter (6) ausgestattet ist.

11. Spülbehälter nach Anspruch 10, **dadurch gekennzeichnet, dass** es sich bei dem Element um ein Heizelement (8) handelt.

## Claims

1. Device for measuring the electrical conductivity of a liquid, comprising a longitudinal body (1) consisting of an electrically insulating material and at least one pair of measuring electrodes (40, 40') with similar shapes situated on external surfaces of said body (1), said electrodes (40, 40') being situated in respective separate planes and said electrically insulating material filling an intermediate space between two electrodes (40, 40') facing each other, **characterised in that** said electrodes (40, 40') are disposed respectively in parallel planes situated symmetrically with respect to a longitudinal axis (11) of said body (1), the electrodes extending parallel to said longitudinal axis (11).

2. Device according to claim 1, **characterised in that** said body (1) comprises a support (23), a mounting flange (3) and a connector (2) that are formed in a single piece, and an external casing (5) that is moulded on around said support (3), and said support (23), mounting flange (3), connector (2) and external casing (5) are produced from an electrically insulating material.

3. Device according to claim 1 or 2, **characterised in that** it also comprises two electrically conductive blades (4, 4') that are partially embedded by overmoulding in said body (1), said blades (4, 4') each comprising first and second parts constituting respectively at least one said measuring electrode (40, 40') and at least one electrical connection pin (41), and a plurality of anchoring orifices (42) for securing together said blades (4, 4') and an overmoulding material.

4. Device according to claims 2 and 3, **characterised in that** said support (23) comprises two opposite surfaces (232, 232') provided with protrusions (236, 236') that support respectively said two blades (4, 4'),
said connector (2) is suitable for receiving said electrical connection pins (41), and
said external casing (5) is moulded on around said support (23), between said blades (4, 4') and said support (23), and on said blades (4, 4'), so as to reveal said measuring electrodes (40, 40').

5. Device according to claim 2 or 4, **characterised in that** said support (23) comprises alveoli (230) in which the material of said overmoulded external casing (5) enters.

6. Device according to claim 3 or 4, **characterised in that** said blades (4, 4') have a flat shape and said electrodes (40, 40') have a rectangular flat shape.

7. Devices according to any one of claims 1 to 6, **characterised in that** said body (1) comprises only flat or convex external surfaces and external surface states suitable for preventing accumulation and/or retention of deposits coming from the liquid in which said body (1) is immersed.

8. Washing tank, in particular for a washing machine or washer drier, **characterised in that** it is equipped with at least one device (9) for measuring electrical conductivity according to any one of the preceding claims 1 to 7.

9. Washing tank according to claim 8, **characterised in that** said electrical conductivity measuring device (9) is mounted in said tank (6) so that said electrodes (40, 40') are disposed in vertical planes and said longitudinal axis (11) of said device (9) is horizontal.

10. Washing tank according to claim 8 or 9, **characterised in that** said electrical conductivity measuring device (9) is mounted sealingly on a mounting flange (80) of an element (8) equipping said tank (6).

11. Washing tank according to claim 10, **characterised in that** said element is a heating element (8).
